Europäisches Patentamt

European Patent Office

Office européen des brevets

(19)

(11) Numéro de publication : **0 593 327 A1**

(12) # DEMANDE DE BREVET EUROPEEN

(21) Numéro de dépôt : 93402370.6

(22) Date de dépôt : 28.09.93

(51) Int. Cl.⁵ : **G02B 5/00, H04N 5/33, G01J 5/06**

(30) Priorité : 09.10.92 FR 9212032

(43) Date de publication de la demande :
**20.04.94 Bulletin 94/16**

(84) Etats contractants désignés :
**DE FR GB IT NL**

(71) Demandeur : **THOMSON-CSF**
**173, Boulevard Haussmann**
**F-75008 Paris (FR)**

(72) Inventeur : **Rollin, Joel**
**THOMSON-CSF, SCPI, BP 329**
**F-92402 Courbevoie Cedex (FR)**

(74) Mandataire : **Lincot, Georges et al**
**THOMSON-CSF, SCPI, B.P. 329, 50, rue**
**Jean-Pierre Timbaud**
**F-92402 Courbevoie Cédex (FR)**

(54) **Caméra infrarouge protégée contre les modulations parasites de flux capté.**

(57)   La caméra infrarouge selon l'invention est protégée des modulations parasites du flux capté, apparaissant au cours du balayage de son détecteur et/ou du fait de la position des capteurs élémentaires dans le détecteur, par maintien de l'étendue géométrique de scène vue par chaque capteur élémentaire à un niveau constant.

   Pour ce faire, l'invention consiste à placer dans un plan π où les faisceaux sont bien dissociés au cours d'un balayage horizontal réalisé par un miroir MH, un cache F comportant une zone d'absorption spectrale dont la surface est calculée pour que le détecteur DP "voit" au cours du balayage une même étendue géométrique à travers le diaphragme froid EF.

   Application à toutes les caméras infrarouges, à balayage mono ou bidirectionnel ou sans balayage.

FIG.1

Le domaine de l'invention se rapporte à la correction des inhomogénéités apparaissant sur les images formées par les systèmes de prise de vue, notamment par les caméras infrarouges.

L'invention a pour objet une caméra infrarouge protégée contre les modulations parasites de flux capté provoquant de telles inhomogénéités.

Les caméras infrarouges sont équipées de détecteurs fonctionnant dans les bandes spectrales 8 à 12 $\mu$m ou 3 à 5 $\mu$m des fenêtres de transmission de l'atmosphère. Contrairement aux systèmes de prise de vue fonctionnant dans la bande spectrale des radiations visibles, les détecteurs des caméras infrarouges ne permettent pas d'obtenir une dynamique importante sur le flux lumineux reçu, ce qui se traduit, sur une image représentant un sujet sur un fond uniforme, par un faible contraste entre le sujet et le fond. Dans ces conditions, les flux parasites sont sources de confusion dans l'interprétation des images formées du fait de la similitude des effets produits.

Les caméras infrarouges comportent généralement un ensemble optique comprenant un système afocal d'entrée, dont le grossissement est adapté au champ visuel désiré, un objectif de tête associé à un groupe optique de reprise d'image et à un groupe de projection du flux lumineux capté sur un détecteur photosensible dans la bande spectrale considérée, pour y former une image optique.

Selon l'art connu, le détecteur est formé soit d'un capteur élémentaire, soit de quelques unités à quelques dizaines de capteurs élémentaires, en Pt-Si ou en HgCdTe, disposés en mosaïque ou en barrette, soit d'un grand nombre de ces capteurs (par exemple 252 X 252) disposés en matrice. Classiquement, les capteurs sont associés à un circuit électronique de lecture des charges libérées par les capteurs proportionnellement au flux reçu, pour délivrer un signal vidéo représentatif de la scène observée. Le détecteur est enfermé dans une enceinte cryostatique refroidie et close par une fenêtre transparente aux radiations infrarouges. Disposé dans le cryostat, un diaphragme dit écran froid délimite l'angle solide sous lequel le détecteur capte le flux lumineux.

Lorsque le détecteur est formé d'un nombre limité de capteurs, un système de balayage à miroirs est nécessairement couplé au détecteur, balayage mono-directionnel dans le cas d'une barrette linéaire ou balayage dédié à l'exploration selon deux directions dans le cas d'un détecteur constitué d'un capteur unique ou d'une mosaïque de quelques capteurs.

Des solutions de type optique et de type électronique ont été élaborées pour éliminer les flux parasites.

Les solutions de type optique orientent le calcul de la combinaison optique afin de ne capter que le flux utile. Un exemple de cette catégorie est décrit dans l'article SPIE, vol. 1488, pages 368 à 375. L'élimination du flux de structure, provenant des éléments de structure interne à la caméra, est obtenue en rejetant la pupille de sortie du système optique au plus près de l'écran froid grâce à un groupe optique de reprise d'image adapté. Malheureusement de telles architectures sont encombrantes et compliquent considérablement le système optique. Ces solutions s'appliquent difficilement, en particulier, aux caméras à double balayage.

Les solutions de type électronique consistent à soustraire au signal vidéo de l'imagerie courante les valeurs d'un signal vidéo d'une image représentant un fond uniforme, et préalablement mémorisées pendant une période de calibration. Pour la calibration, un fond uniforme est obtenu en plaçant un obturateur devant l'objectif ou en commutant le trajet optique sur un corps noir fournissant une température de référence. Une telle mise en oeuvre est illustrée par l'article SPIE volume 782, pages 39-40. Cette solution pose de nombreux problèmes : homogénéité en température sur le corps noir difficile à maîtriser, rapidité de réponse de la bande d'asservissement, contrôle et mesure de la température.

L'invention vise à mettre en oeuvre une solution plus simple dans sa structure et moins complexe dans son utilisation que les systèmes précédents. Elle est basée sur une analyse photométrique des variations de flux captées par le détecteur. Ces variations ont deux origines :

- une origine externe, correspondant aux écarts de température dans la scène observée et définissant le flux utile ;
- une origine interne, induite par les distorsions opto-géométriques et le vignettage du système optique évoluant au cours du balayage, et/ou par la structure environnant les capteurs élémentaires et différant en fonction de leur position.

Ce sont ces variations de flux d'origine interne qui constituent les variations parasites venant perturber le bon fonctionnement de la caméra, cette perturbation se traduisant par visualisation, après traitement du signal vidéo, de modulations qui ne sont pas représentatives de la scène observée.

Pour résoudre le problème posé, l'invention vise alors à supprimer les modulations parasites du flux de scène correspondant aux variations de l'étendue géométrique de la scène observée induites par le balayage et/ou par la position non équivalente des capteurs élémentaires vis-à-vis de la structure interne de la caméra. L'étendue géométrique est une grandeur liée à l'angle solide de vue et sera définie plus loin.

Un tel objectif est atteint, selon l'invention, par interposition dans l'architecture optique de la caméra d'un cache optique à absorption partielle du flux capté par la caméra dont le profil d'absorption est calculé de manière à maintenir l'étendue géométrique de scène vue par le détecteur à une valeur indépendante du balayage et de la position du capteur dans la mosaïque détectrice.

Plus précisément, l'invention a pour objet une caméra infrarouge protégée contre les modulations parasites de flux capté, comportant un détecteur possédant au moins un capteur élémentaire photosensible dans une bande de radiations donnée et disposé dans un cryostat, un système optique de reprise d'image et de focalisation sur ce détecteur d'un faisceau lumineux provenant d'une scène à observer, ce système ayant un axe optique, un diaphragme froid disposé dans le cryostat définissant une étendue géométrique de scène vue par chaque capteur, la caméra étant caractérisée en ce que le système optique comporte un cache optique interceptant partiellement le faisceau lumineux par absorption des radiations de la bande spectrale donnée dans au moins une zone délimitée, le profil de ces zones définissant à tout instant une étendue géométrique de scène réglée sur une valeur constante pour tous les capteurs élémentaires et ne dépendant pas de la position des miroirs de balayage.

Selon un aspect de l'invention, l'élément optique absorbant est placé dans la combinaison optique de manière à ne produire qu'une dégradation minimale des performances de la caméra mesurées par les grandeurs caractéristiques de son détecteur (Puissance Equivalente au Bruit N.E.P., Ecart de Température équivalent au Bruit N.E.T.D., Ecart Minimum de Température Séparable M.R.T.D., etc...)

L'invention peut s'adapter à tout type de caméra infrarouge connue, à balayage simple ou double où sans balayage suivant le type de détecteur utilisé ; elle permet, lors de la définition de nouvelles architectures infrarouges, d'élaborer des combinaisons optiques plus simples pour répondre au problème posé que les solutions traditionnelles conçues pour faire coïncider la pupille de sortie avec l'écran froid.

Des exemples de mise en oeuvre, ainsi que d'autres caractéristiques et avantages de l'invention, sont exposés dans la description qui suit, accompagnée de figures annexées qui représentent respectivement :
- la figure 1, un exemple schématique d'optique de caméra infrarouge à double balayage et détecteur ponctuel ;
- les figures 2a et 2b, deux diagrammes de variation des étendues géométriques vues d'un capteur élémentaire au cours d'un balayage le long d'une détection ;
- les figures 3a et 3b, deux exemples de profil des zones d'absorption spectrale du cache optique caractéristique de l'invention, correspondant respectivement aux variations d'étendue géométrique représentées aux figures 2a et 2b ;
- la figure 4, un exemple d'implantation de l'élément optique caractéristique de l'invention dans une caméra infrarouge à détecteur en mosaïque nécessitant un double balayage ;
- les figures 5 et 6, deux exemples de cache d'absorption spectrale dans le cas où l'objectif est, respectivement, mono et bifocal.

Afin de décrire l'invention à partir d'un exemple simple, une application aux caméras équipées d'un détecteur comportant un seul ou un nombre très limité de capteurs élémentaires est tout d'abord exposée. Dans de telles caméras, le détecteur est associé à un système à double balayage de structure relativement simple.

Ainsi, dans l'exemple schématique du système optique d'une caméra infrarouge à double balayage représenté sur la figue 1, le système de balayage est constitué de deux miroirs MV et MH oscillant autour de deux axes perpendiculaires, X'X et Z'Z, pour réaliser respectivement une exploration verticale et horizontale de l'espace observé.

La formule optique comporte classiquement un diaphragme d'ouverture réel, matérialisé par exemple par un stop ST entre les miroirs MV et MH (dans d'autres exemples, ce diaphragme d'ouverture peut être matérialisé par la lentille frontale d'un objectif de tête). Les miroirs MH et MV oscillent respectivement autour d'axes V'V et H'H pour balayer le champ en ligne à différentes hauteurs. Comme pour toute caméra infrarouge, un groupe optique de reprise et de focalisation GR, à une ou plusieurs lentilles disposées sur un axe optique A'A, projette le flux lumineux provenant de la scène observée sur le détecteur, ici un détecteur ponctuel DP comportant un seul ou un nombre très limité de capteurs élémentaires. Le détecteur DP est disposé dans une enceinte cryostatique EC, refroidi par un doigt froid Df dont la température est maintenue à la température de fonctionnement du détecteur, par exemple -77°K, par des moyens connus.

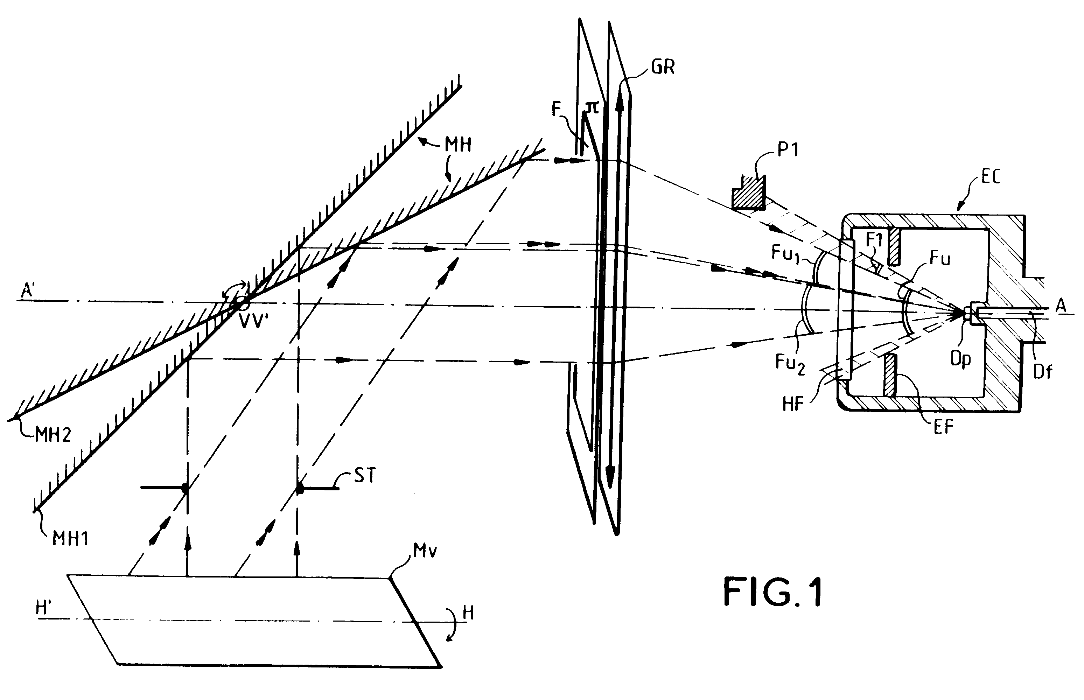

Le cryostat EC est fermé par un hublot HT, transparent à la bande spectrale de sensibilité du détecteur. Le flux lumineux reçu par le détecteur se compose du flux utile Fu, encore appelé flux de scène car il représente le flux provenant de la scène observée, et de flux internes de structure provenant de différentes zones de la caméra, ces zones pouvant être à différentes températures. Sur la figure 1, il a été représenté à titre d'exemple le flux de structure F1 provenant d'une pièce mécanique P1.

Un diaphragme EF, encore appelé écran froid, est disposé à l'intérieur du cryostat et délimite le champ de vue du détecteur. Au cours du balayage horizontal, permettant au détecteur de "voir" une ligne horizontale du champ observé, le flux lumineux utile Fu se décale de $Fu_1$ à $Fu_2$ le long de l'écran froid EF, comme l'illustre les positions des faisceaux délimités par les rayons à simple et double flèche correspondant respectivement aux positions centrale et extrême, MH1 et MH2, du miroir de balayage horizontal MH.

3

Un cache optique F absorbant une partie du flux utile, est disposé sur l'axe optique AA', entre le miroir du balayage horizontal MH et le hublot d'entrée de l'enceinte EC, c'est-à-dire au niveau du groupe optique de reprise GR.

Cet élément optique F est destiné à corriger les variations de flux parasites ; selon l'invention deux impératifs guident l'optimisation de cette correction à l'aide d'un tel élément absorbant :

- le choix de son emplacement sur l'axe optique AA' : il est déterminé par la possibilité d'obtenir, dans le plan choisi, une dissociation importante entre les traces du faisceau optique utile formées au cours du balayage ; une dissociation suffisante permet en effet de fournir une bonne précision quant au découpage de la partie du flux à intercepter ; sur la figure 1, le plan $\pi$ représenté fournit un exemple d'implantation de l'élément F ;

- le calcul du profil de la zone d'absorption spectrale de l'élément intercepteur F :

  la zone d'absorption de l'élément F est destinée à compenser la variation, au cours du balayage horizontal, de l'angle solide utile sous lequel le capteur élémentaire observe la scène à chaque instant.

En effet, le flux reçu par un capteur élémentaire au cours du balayage d'une scène représentant un fond uniforme à température constante $T_s$ ne se conserve pas. Sa variation $\Delta\varnothing$ peut s'exprimer sous la forme suivante d'une variation du flux de scène et d'une variation de flux de structure, si l'on néglige les pertes par transmission des éléments optiques :

$$\Delta\varnothing = \Delta G_s \ (L(T_s) - L(T_m)) \ + \ \sum_{1}^{k} k_j \Delta G_j$$

dans laquelle :

- $G_s$ est l'étendue géométrique de scène égale à la projection, perpendiculairement à l'axe optique AA', de l'angle solide sous lequel le capteur élémentaire considéré "observe" la scène ;
- L (T) est la luminance reçue par le capteur, T étant la température de la scène observée pour le flux utile ou la température de la pièce mécanique interceptée pour le flux parasite ;
- $T_m$ est la température moyenne interne de la caméra ;
- $G_j$ est l'étendue géométrique relative à l'angle solide sous lequel le capteur élémentaire "voit" les différentes pièces de structure de la caméra ayant respectivement différentes températures $T_j$ ;
- $k_j$ est un coefficient de proportionnalité dépendant de la différence de température $T_j$ - $T_m$.

Le second terme de $\Delta\varnothing$, représentant les variations de flux de structure, est une sommation liée aux inhomogénéités de la température des structures internes de la caméra : il peut être minimisé par une implantation rationnelle des sources chaudes (moteurs par exemple) dans l'architecture mécanique de la caméra. Le premier terme, représentant la variation du flux de scène, est lié à la variation de l'angle solide de vue de la scène et, plus précisément, de l'étendue géométrique de scène $G_s$. Cette variation résulte des problèmes de vignettage et de distorsion de la chaîne optique précédant le détecteur.

La variation du flux de scène est annulé dans le cadre de l'invention par l'interposition adéquate de l'élément F qui absorbe, au cours du balayage, une partie adaptée du flux de scène reçu pour permettre de maintenir constante l'étendue géométrique de scène à une valeur constante.

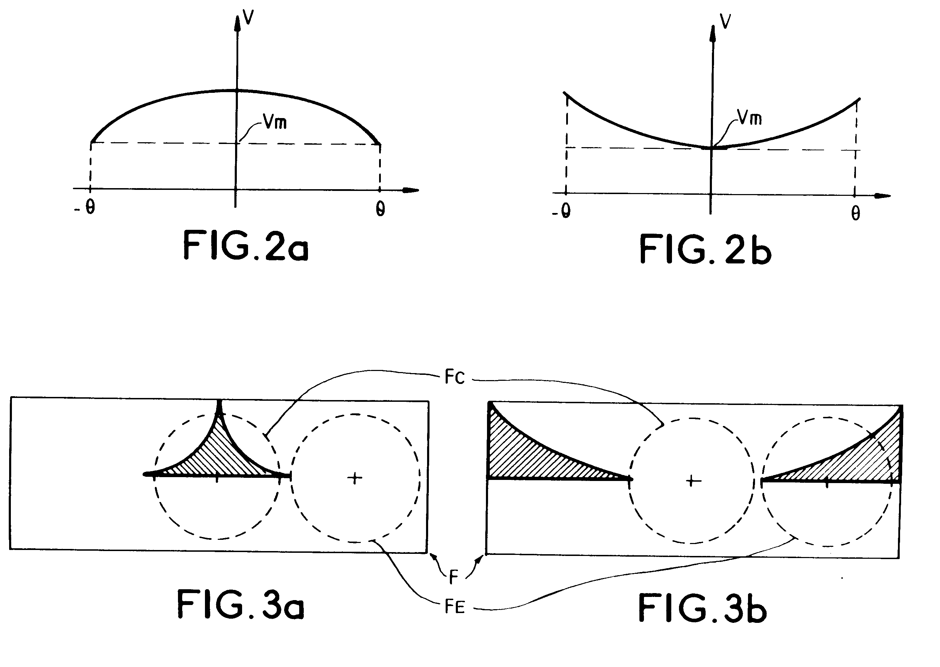

Cette adaptation est obtenue, par exemple, par un calcul du profil de la zone d'absorption de l'élément F déduit de la courbe de variation de $G_s$ en fonction de l'angle de balayage horizontal, variant de -$\theta$ à + $\theta$ . L'allure de cette courbe est celle du graphe des valeurs V du signal vidéo obtenu lors du balayage d'une ligne horizontale d'une scène représentant un fond à la température uniforme $T_s$. De tels graphes sont représentés aux figures 2a et 2b suivant l'architecture optique utilisée, les variations de flux au cours du balayage ont soit une allure de dôme (figure 2a) soit une allure de cuvette (figure 2b). Dans les deux cas, les courbes passent par un minimum Vm.

Dans le cas d'une architecture optique de type de celle illustrée sur la figure 1, la variation du flux a généralement une forme de dôme (figure 2a) pour laquelle le détecteur reçoit plus de flux de scène que de flux de structure interne au centre du champ balayé, la situation étant inversée dans le cas de la figure 2b : tout se passe comme si le détecteur recevait trop de flux au centre (figure 2a) ou aux extrémités (figure 2b) du champ balayé. Le profil de l'élément absorbant F est donc calculé pour aligner la valeur de V, et donc de $G_s$, à son minimum $V_m$ avant correction, de sorte que les courbes corrigées soient des droites horizontales DH.

Le calcul peut être conduit, après mémorisation des valeurs du signal vidéo obtenues pour une scène à température uniforme,

- en tenant compte de la surface du faisceau coupé dans le plan $\pi$ d'implantation de l'élément absorbant,

- en intégrant, pour chaque position de ce faisceau coupé au cours du balayage, la valeur de flux excédentaire par rapport à un flux constant minimal correspondant à $V_m$,
- en traduisant cette valeur excédentaire en terme de surface de faisceau coupé,
- et en sélectionnant un contour définissant une zone absorbante correspondant à la valeur excédentaire de flux devant être retranchée par absorption, parmi plusieurs courbes pré-enregistrées.

Il existe alors deux types de profil de zone absorbante pour l'élément absorbant F, représentés sur les figures 3a et 3b, et correspondant respectivement à des variations d'étendues géométriques de scène dont les allures, en dôme et en cuvette, ont été données sur les figures 2a et 2b. Des traces FC et FE du faisceau lumineux dans le plan de ces zones absorbantes sont représentées en pointillé, et correspondent respectivement à des positions centrales et extrêmes du balayage horizontal. Ces traces permettent d'apprécier le rapport entre flux absorbé et flux non absorbé pour une position donnée du faisceau et de son évolution lorsque l'on passe d'une position à une autre : sur la figure 3a, le flux est absorbé au maximum pour la position centrale du balayage, alors que sur la figure 3b, ce maximum se produit pour les positions extrêmes du balayage.

Ces flux excédentaires correspondent à des modulations parasites et l'utilisation d'un élément présentant une zone d'absorption adaptée, permet alors une compensation optimale puisque seule la portion parasite du flux est vignettée.

Dans le cas d'un cache du type de celui illustré par la figure 3b, les performances de la caméra, mesurée en termes d'Ecart de Température Equivalent au Bruit ("Noise Equivalent Temperature Difference" ou N.E.T.D. en terminologie anglo-saxonne) sont donc conservées puisque le faisceau lumineux n'est pas diminué dans la partie centrale du balayage. La fonction de transfert de modulation spatiale (FTM) est légèrement modifiée pour les points du champ où le diaphragme agit ; mais le flux arrêté par ce diaphragme est faible (typiquement 2 à 5 % ) la variation de FTM qui en résulte peut être considérée comme négligeable.

Les zones absorbantes peuvent être constituées par un filtre spectral absorbant les radiations situées dans la bande de sensibilité du détecteur, le découpage du contour du filtre étant commandé par l'équation du profil défini précédemment. Les zones absorbantes sont, par exemple, fixées sur un support transparent aux radiations de la bande de sensibilité du détecteur pour former un cache. D'autres moyens de fixation connus de l'Homme de l'Art peuvent également convenir. Le cache peut également être constitué par une lame à transmission variable dont les lignes de gradient de transmission reproduisent le contour des zones absorbantes définies précédemment.

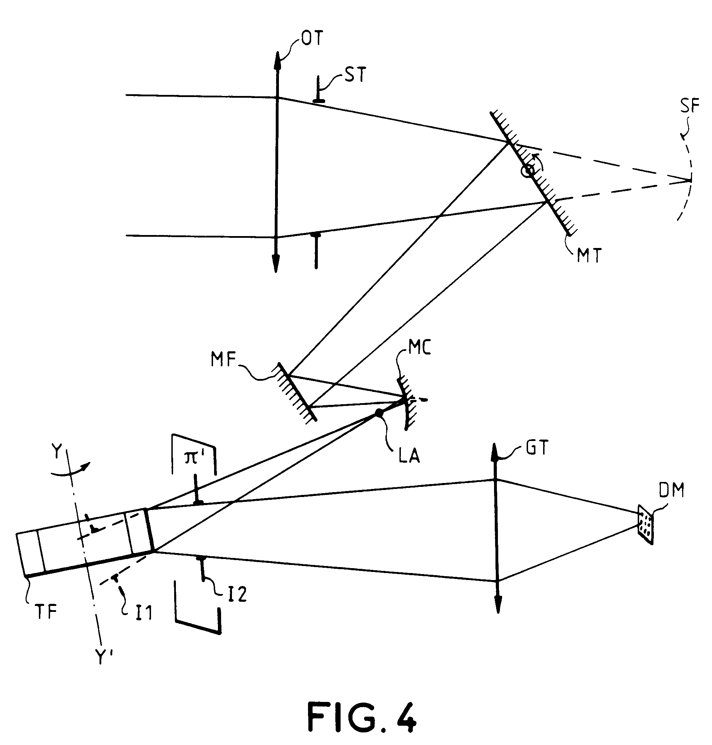

Dans le cas d'un détecteur constituée d'une mosaïque de quelques lignes de capteurs élémentaires, par exemple une cinquantaine de capteurs, le double balayage nécessite la présence d'éléments réfléchissants plus nombreux et plus complexes. Un exemple classique de balayage de ce type est représenté sur la figure 4. Il comprend :

- un système de balayage trame composé d'un miroir trame oscillant MT associé à un miroir de champ MC généralement sphérique et qui tourne en synchronisme avec le miroir trame MT, suivant une loi angulaire permettant de diriger à tout instant les faisceaux sur un tambour d'analyse ligne TF ;
- un système de balayage ligne comportant le tambour d'analyse ligne à faces réfléchissantes TF, qui tourne autour d'un axe Y'Y, et qui est associé à un groupe optique de transport et de projection d'image GT sur le détecteur DM.

A l'aide de ce module de balayage, un faisceau lumineux qui traverse un objectif de tête OT, de surface focale SF, est focalisé sur le miroir de champ MC, par réflexion sur le miroir trame MT couplé à un miroir fixe auxiliaire MF. Le synchronisme entre les rotations des deux miroirs MT et MC permet de positionner le faisceau réfléchi par MC sur une facette du tambour TF, qui le projette sur le détecteur DM par l'intermédiaire du groupe optique GT.

L'image du détecteur, obtenue par réflexion sur le tambour, décrit une ligne d'analyse, LA, approximativement en forme d'un arc de cercle perpendiculaire au plan de la figure, lorsque celui-ci tourne d'un angle correspondant au passage d'une facette. Le miroir de champ MT conjugue alors cette ligne d'analyse avec la surface focale SF de l'objectif OT. C'est cette conjugaison qui assure la jonction entre le traitement optique et le traitement électronique de l'image effectué à partir du détecteur.

Dans ce type de module de balayage, les modulations parasites du flux de scène résultent principalement des distorsions dues au miroir de champ MC : la ligne d'analyse s'écarte en effet du miroir de champ aux extrémités du balayage horizontal, de sorte que le grandissement de la conjugaison par ce miroir est plus grand au bord de ligne qu'au centre. Dans ces conditions, l'étendue géométrique, liée à la dimension du détecteur vu par l'objectif OT, est plus importante au bord qu'au centre au cours du balayage, et ses variations sont alors régies par une loi en cuvette du type illustré par la figure 2b. Il est possible de montrer que le groupe optique de transport d'image GT peut avoir une influence inverse, sans toutefois compenser celle du miroir de champs MC qui reste prépondérante.

Quant à l'influence de l'objectif de tête OT, elle n'est que fonction de sa pupille de sortie :

- si cet objectif possède un diaphragme d'ouverture réel, matérialisable, comme sur la figure 4, par un stop ST, et si cet objectif ne possède pas de vignettage, les modulations parasites du flux de scène sont uniquement induites par le module de balayage ;
- si l'objectif possède un diaphragme d'ouverture interne réel, il faut ajouter les distorsions provenant des éléments optiques situés entre ce diaphragme et le module de balayage ;
- par ailleurs, dans le cas où la distance focale de l'objectif de tête est longue (par exemple avec une formule optique du type téléobjectif), c'est-à-dire pour de petits champs d'entrée, le diaphragme d'ouverture peut être matérialisé par la lentille frontale de l'objectif de tête ; or cette lentille n'induit qu'une faible distorsion, suffisamment faible pour être négligeable par rapport à celle du module de balayage.

Par rapport au cas du détecteur à capteur unique, vu précédemment, la présence d'une mosaïque de capteurs induit une dépendance supplémentaire de l'étendue géométrique : celle de la position du capteur dans cette mosaïque. Choisir l'emplacement du cache optique absorbant F dans un plan $\pi'$ d'une pupille instantanée permet alors de s'affranchir de cette influence. Par exemple, cet élément peut être implanté dans le plan $\pi'$ de l'image du stop ST, formée par réflexion successive sur le miroir de champ MC, qui donne une image intermédiaire virtuelle I1 du stop, puis sur la facette du tambour TF située sur le trajet optique qui forme l'image I2 de I1 dans le plan $\pi'$.

D'autre part, le calcul de la forme des zones d'absorption de l'élément optique F dépend, dans le cas général où interviennent les distorsions du module de balayage et des aberrations de l'objectif de tête, de la position du diaphragme d'ouverture de l'objectif de tête :

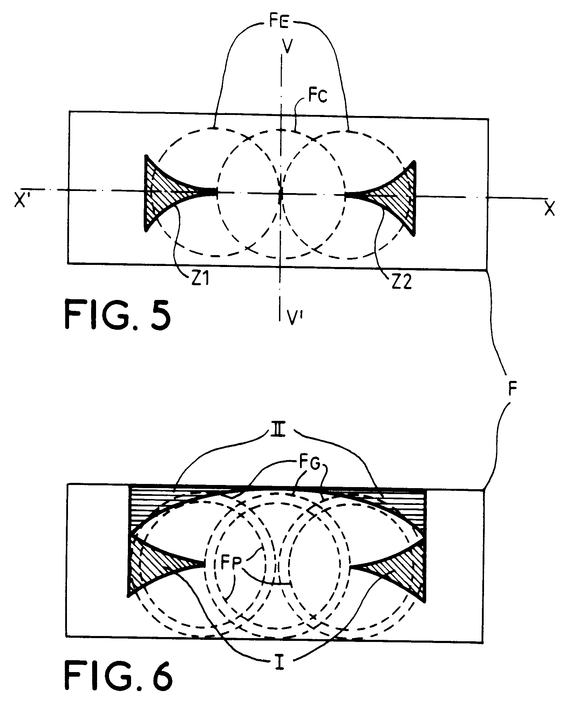

- Le diaphragme d'ouverture est situé sur la pupille de sortie de l'objectif : la seule correction concerne la distorsion du module de balayage, et l'allure des zones d'absorption de l'élément d'interception optique destinées à corriger l'excédent de flux en bordure du balayage, est proche de celle représentée sur la figure 3b. Un exemple de profil de ces zones apparaît plus précisément sur la figure 5, qui montre un cache F comprenant deux zones d'absorption Z1 et Z2, symétriques par rapport aux axes de balayage V'V et X'X ; les zones Z1 et Z2 masquent principalement les faisceaux en extrémité de balayage horizontal, la zone centrale de balayage étant non corrigée ; des traces FC et FE du faisceau lumineux respectivement au centre et aux extrémités de balayage sont représenté en pointillé ;
- Le diaphragme d'ouverture est interne à l'objectif de tête : si l'objectif est monofocal, la distorsion de l'ensemble - objectif et module de balayage - produit une variation d'étendue géométrique du même type que précédemment (figure 2b) ; les zones absorbantes ont donc le même profil que sur la figure 5 ;
- L'objectif est bifocal : le passage étant réalisé par exemple à l'aide du basculement d'un barillet mobile, il existe pour chaque figuration - petit et grand champ - un stop réel. Si le diaphragme d'ouverture reste le même en petit et grand champ, la correction est indépendante de la configuration et est effectuée comme dans le cas d'un objectif monofocal.

Dans le cas général, illustré par la figure 6 qui représente un exemple de zones d'absorption du cache optique et des faisceaux coupés dans le plan de ce cache, l'objectif n'est pas utilisé à pleine ouverture du module de balayage en petit champ, et les faisceaux petit champ FP sont de diamètre inférieur aux faisceaux grand champ FG, que ce soit au centre ou en extrémité de balayage. Dans ces conditions, le diaphragme d'ouverture en petit champ est sur la lentille frontale de l'objectif et, en grand champ, le stop réel reste situé au voisinage de la dernière lentille de l'objectif.

Les zones d'absorption, telles qu'illustrées sur la figure 6, se composent dans ces conditions de premières zones I pour annuler les variations parasite apparaissent en petit champ, les zones I étant de même allure que celles illustrées par la figure 5 correspondant au cas précédent, et de secondes zones II destinées à affiner la correction en grand champ. L'ensemble des zones I et II ne coupant pas de rayon utile au centre du champ, la N.E.T.D. pour le centre du champ est conservée pour les deux focales.

L'invention n'est pas limitée aux exemples d'applications décrits mais peut également s'étendre à des caméras à balayage monodirectionnel, utilisant comme détecteur une barrette détectrice de grande longueur ou à des caméras équipées de détecteur comportant un très grand nombre de capteurs disposés en matrice et ne nécessitant pas de balayage.

Dans ces deux cas d'application, le cache utilisé dont les zones d'absorption ont des contours illustrés par les figures 3a ou 3b, suivant les conditions de mise en oeuvre, ne corrige plus la modulation du flux de scène induite par le balayage, mais compense les variations prépondérantes résultant des différences de positions occupées par les capteurs élémentaires dans la barrette ou dans la matrice.

**Revendications**

1 - Caméra infrarouge protégée contre les modulations parasites de flux capté, comportant un détecteur (DP, DM) possédant au moins un capteur élémentaire photosensible dans une bande de radiations donnée et disposé dans un cryostat (EC), un système optique (GR) de reprise d'image et de focalisation sur ce détecteur d'un faisceau lumineux provenant d'une scène à observer, ce système ayant un axe optique (AA'), un diaphragme froid (Df) disposé dans le cryostat (EC) définissant une étendue géométrique de scène vue par chaque capteur, la caméra étant caractérisée en ce que le système optique comporte un cache optique (F) interceptant partiellement le faisceau lumineux par absorption des radiations de la bande spectrale donnée dans au moins une zone délimitée (Z1, Z2), le profil de ces zones définissant à tout instant une étendue géométrique de scène réglée sur une valeur constante pour tous les capteurs élémentaires.

2 - Caméra selon la revendication 1, caractérisée en ce que les zones d'absorption du cache (F) sont constituées par un filtre spectral absorbant les radiations situées dans la bande de sensibilité du détecteur (DP).

3 - Caméra selon la revendication 1, caractérisée en ce que le cache (F) est constitué par une lame à transmission variable dont les lignes de gradient de transmission reproduisent le profil des zones d'absorption (71, 72).

4 - Caméra selon l'une des revendications 1 à 3, comportant un système à double balayage horizontal et vertical et un détecteur (DP) à capteurs élémentaires très limité, caractérisée en ce que le cache (F) est disposé dans un plan ($\pi$) perpendiculaire à l'axe optique (AA'), ce plan ($\pi$) étant choisi pour que les faisceaux lumineux coupés par celui-ci au cours du balayage horizontal soient dissociés, et en ce que le profil des zones d'absorption du cache (F) définit à tout instant une étendue géométrique de scène réglée sur sa valeur minimale correspondant à celle donnée, avant correction, par la position centrale du balayage horizontal.

5 - Caméra selon l'une des revendications 1 à 3, comportant un système à double balayage horizontal et vertical complété par un objectif de tête monofocal (OT) et un miroir de champ (MC) pour permettre une focalisation sur un détecteur (DM) à capteurs élémentaires disposés selon une mosaïque balayée par le système, caractérisée en ce que le cache (F) est disposé dans un plan ($\pi'$) d'une pupille instantanée, et en ce que l'étendue géométrique de scène est réglée par le profil des zones d'absorption du cache (F) sur sa valeur minimale correspondant à celle donnée, avant correction, par la position centrale du balayage horizontal.

6 - Caméra selon la revendication 5, comportant un objectif de tête bifocal, fournissant un petit champ en grande focale et un grand champ en petite focale, caractérisée en ce que les zones d'absorption du cache (F) comportent des premières zones (I) pour annuler les variations d'étendue géométrique en petit champ, et des secondes zones (II) destinées à compléter l'élimination de ces variations en grand champ, les faisceaux en petit champ (FP) étant de diamètre inférieur aux faisceaux en grand champ (FG) dans le plan du cache.

FIG.1

V

Vm

-θ          θ

FIG.2a

V

Vm

-θ          θ

FIG.2b

Fc

FE          F

FIG.3a          FIG.3b

FIG.4

FIG. 5

FIG. 6

EP 0 593 327 A1

Office européen
des brevets

RAPPORT DE RECHERCHE EUROPEENNE

Numero de la demande
EP 93 40 2370

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | EP-A-0 364 347 (SOCIETE ANONYME DE TELECOMMUNICATIONS) * page 1, colonne 1, ligne 1 - ligne 34 * * abrégé; figures 1,4 * | 1 | G02B5/00 H04N5/33 G01J5/06 |
| A | US-A-5 019 703 (D.W.BOYD ET AL.) * colonne 1, ligne 41 - colonne 2, ligne 2 * * colonne 9, ligne 35 - ligne 62; revendication 1; figures 9-14 * | 1-3 | |
| A | EP-A-0 197 251 (DAINIPPON SCREEN MFG.CO.) * le document en entier * | 1,2,4 | |
| D,A | PROC. SPIE; INFRARED IMAGING SYSTEMS: DESIGN, ANALYSIS,MODELING AND TESTING II vol. 1488 , Avril 1991 , WASHINGTON, US pages 368 - 375 T.MATSUSHITA ET AL. 'High-resolution thermal imager with a field of view of 112 degrees' * page 370, dernier alinéa - page 371, dernier alinéa ; figure 2 * | 1 | |

DOMAINES TECHNIQUES RECHERCHES (Int.Cl.5)

G02B
H04N
G01J

Le présent rapport a été établi pour toutes les revendications

| Lieu de la recherche | Date d'achèvement de la recherche | Examinateur |
|---|---|---|
| LA HAYE | 27 Décembre 1993 | Scheu, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

12